# EUROPEAN PATENT SPECIFICATION

(11) **EP 2 506 562 B1**
(45) Date of publication and mention of the grant of the patent: **25.07.2018**
(21) Application number: 10831797.5
(22) Date of filing: 18.11.2010
(51) Int. Cl.: H04N 5/262

(54) **ADAPTIVE OBJECT TRACKING METHOD, SYSTEM, AND COMPUTER READABLE RECORDING MEDIUM**
ADAPTIVES OBJEKTVERFOLGUNGSVERFAHREN UND -SYSTEM SOWIE COMPUTERLESBARES AUFZEICHNUNGSMEDIUM
PROCÉDÉ, SYSTÈME ET SUPPORT D'ENREGISTREMENT LISIBLE PAR ORDINATEUR POUR LE SUIVI ADAPTATIF D'UN OBJET

(30) Priority: 23.11.2009 KR 20090113560
(43) Date of publication of application: 03.10.2012
(73) Proprietor: Intel Corporation, Santa Clara, CA 95054 (US)
(72) Inventor: CHOI, Song Ki, Seoul 156-091 (KR); HEO, Chung Bin, Seoul 138-846 (KR)
(74) Representative: Rummler, Felix
(86) International application number: PCT/KR2010/008163
(87) International publication number: WO 2011/062430

(56) References cited:
- EP-A1- 2 028 620
- JP-A- 2009 159 356
- KR-A- 20080 073 933
- KR-B1- 100 348 357
- KR-B1- 100 470 931
- US-A1- 2003 081 813
- US-A1- 2007 273 765
- US-A1- 2009 208 053
- US-B1- 6 246 321

## Description

The present invention relates to a method, an apparatus and a computer-readable recording medium for adaptively tracking a subject; and more particularly, to the method, the apparatus and the computer-readable recording medium for performing subject tracking in a video more rapidly and more accurately by selectively using a subject detection technology and a block matching technology and providing an algorithm for adaptively tracking a subject included in frames of a video, e.g., a person's face.

Recently, as functions of digital cameras, mobile phones and other camera devices for shooting videos become more intelligent and smarter, users' expectations for artificial intelligence functions in camera devices have been increasing, and therefore, a function for tracking a region of a face in a video has been introduced as a basic function of such camera devices. Furthermore, given limited computational speeds of mobile camera devices, which are difficult to have high performance processors, and computational loads caused by other essential processes, which must run in such mobile camera devices, a more effective face tracking technology is required.

If a subject detection technology is applied to track a subject such as a face in a video in the whole region of each frame of the video, a rapid execution time cannot be expected. To track the subject more effectively, another proper subject tracking technology is required.

First of all, as an example of conventional subject tracking technology, there is a technology for basically applying a partial detection process only to a region around a detected subject on the previous frame (i.e., Partial Detection: PD) and occasionally applying a full detection process to the entire region of some frames in order to improve precision of farce tracking (i.e., Full Detection: FD). The conventional technology has an advantage of enhancing the speed of subject tracking by appropriately mixing existing subject detection algorithms, but since the subject detection algorithms are low speed algorithms due to a high computational complexity, it is inappropriate to be applied to the mobile camera devices.

Another example of conventional technology is a technology which uses a block matching algorithm, a mean shift algorithm, or the like. According to another example of conventional technology, it may reduce the execution time compared to the technology which uses the subject detection algorithms because it requires less computational speed but its problem is that a successful tracking rate is not high in the real environment in which an outward appearance, location, etc. of a subject may be significantly changed.

EP2028620A1 discloses a subject tracking method including calculating a similarity factor indicating a level of similarity between an image contained in a search frame at each search frame position and a template image by shifting the search frame within a search target area set in each of individual frames of input images input in time sequence, determining a position of the search frame for which a highest similarity factor value has been calculated, within each input image to be a position (subject position) at which a subject is present, tracking the subject position thus determined through the individual frames of input images, calculating a difference between a highest similarity factor value and a second highest similarity factor value and setting the search target area for a next frame based upon the calculated difference.

US2007/273765A1 discloses a method for detecting desired objects in a highly dynamic environment by a monitoring system by tracking foreground objects in a subsequent image.

Accordingly, a necessity of a new technology for tracking a subject accurately and seamlessly on a mobile terminal is emerging.

It is, therefore, an object of the present invention to solve all the aforementioned problems.

It is another object of the present invention to provide an algorithm for adaptively tracking a subject included on a video frame by selectively employing a subject detection algorithm and a block matching algorithm based on a certain threshold.

It is yet another object of the present invention to adjust a threshold as a criterion of changing a subject tracking method, i.e., either a subject detection method or a block matching method, in consideration of contrast in a video-shooting environment, determine a search region in a block matching process by estimating a movement of the subject, and automatically perform a subject detection process in response to a rapid environment change. Aspects of the invention are set out in the appended claims. The above objects and features of the present invention will become more apparent from the following description of the preferred embodiments given in conjunction with the accompanying drawings, in which:
Figs. 1 and 2 are diagrams exemplarily representing an internal configuration of a subject tracking apparatus in accordance with an example embodiment of the present invention.
Fig. 3 is a drawing exemplarily showing a configuration for performing block matching in accordance with an example embodiment of the present invention.
Fig. 4 is a state diagram exemplarily illustrating a course of determining a subject tracking method in accordance with an example embodiment of the present invention.

The detailed description of the present invention illustrates specific embodiments in which the present invention can be performed with reference to the attached drawings.

In the following detailed description, reference is made to the accompanying drawings that show, by way of illustration, specified embodiments in which the present invention may be practiced. These embodiments are described in sufficient detail to enable those skilled in the art to practice the present invention. It is to be understood that the various embodiments of the present invention, although different from one another, are not necessarily mutually exclusive. The following detailed description is, therefore, not to be taken in a limiting sense, and the scope of the present invention is defined only by the appended claims. In the drawings, like numerals refer to the same or similar functionality throughout the several views.

The configurations of the present invention for accomplishing the objects of the present invention are as follows:
Herein, detecting a subject "directly" from a certain video frame means a method for finding the subject included in the certain video frame by using only information on a pixel(s) of the certain video frame without referring to any other frames temporally adjacent to the certain video frame and it must be understood to be distinguished from a block matching algorithm which searches the subject included in the certain video frame by referring to other frames temporally adjacent to the certain video frame.

### Configuration of Subject Tracking Apparatus

Below is a detailed explanation on an internal configuration of a subject tracking apparatus and a function of each component thereof which performs important roles for implementing the present invention.

In accordance with an example embodiment of the present invention, a digital device which has a memory means and a micro processor with a calculation ability such as a personal computer (e.g., desktop, laptop, etc.), a server, a workstation, a PDA, a web pad, a cellular phone, a camera device, etc. may be adopted as the subject tracking apparatus 100 in the present invention.

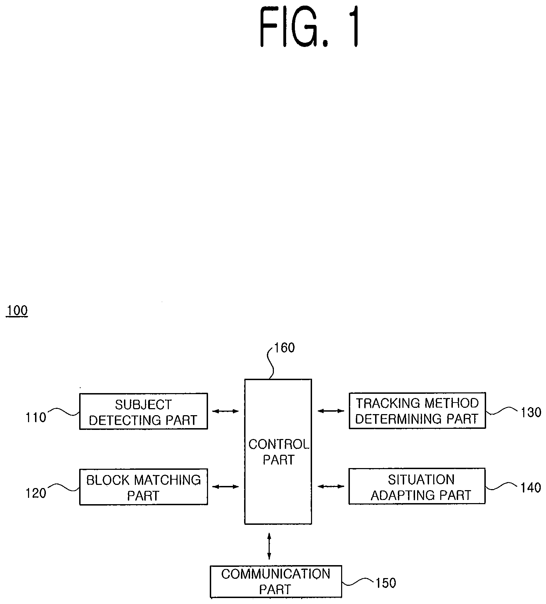

Fig. 1 exemplarily represents the internal configuration of the subject tracking apparatus in accordance with an example embodiment of the present invention.

By referring to Fig. 1, the subject tracking apparatus 100 in accordance with an example embodiment of the present invention may include a subject detecting part 110, a block matching part 120, a tracking method determining part 130, a situation adapting part 140, a communication part 150 and a control part 160 and the situation adapting part 140 may include a threshold adjusting part 141, a subject movement estimating part 142 and an automatic renewal part 143. In accordance with an example embodiment of the present invention, at least some of the subject detecting part 110, the block matching part 120, the tracking method determining part 130, the situation adapting part 140, the communication part 150 and the control part 160 may be program modules communicating with an external system (not illustrated). The program modules may be included in the subject tracking apparatus 100 in a form of an operating system, an application program module and other program modules and may be also stored on several memory devices physically. Furthermore, the program modules may be stored on remote memory devices communicable to the subject tracking apparatus 100. The program modules may include but not be subject to a routine, a subroutine, a program, an object, a component, and a data structure for executing a specific operation or a type of specific abstract data that will be described in accordance with the present invention.

First, the subject detecting part 110 in accordance with an example embodiment of the present invention may perform a function of detecting a subject (e.g., a person's face) included in a frame in a video, such as a movie, a preview, etc., by using a certain subject detection algorithm. More specifically, the subject detecting part 110 in accordance with an example embodiment of the present invention may detect the subject for the entire region of the frame, i.e., all pixels which constitute the frame (i.e., Full Detection: FD); or for a partial region of the frame, i.e., pixels only set as a search region (i.e., Partial Detection: PD). As explained below, a region which the subject detected by the subject detecting part 110 occupies in the frame may be used as a reference block during a course of block matching.

As mentioned above, to detect the subject included in the video frame by the subject detecting part 110, a certain subject detection technology must be adopted. As the certain subject detection technology, an article titled "Vector Boosting for Rotation Invariant Multi-View Face Detection" authored jointly by Chang HUANG and three others and published in "ICCV (International Conference on Computer Vision)" in 2005 may be referred to (The whole content of the article may be considered to have been combined herein) . The article describes how to detect a face region accurately by the vector boosting algorithm capable of distinguishing various angles of a subject included in an image even though a face included in the image is leaned at a specific angle. Of course, the subject detection technology applicable to the present invention is not limited only to the method described in the aforementioned article and it will be able to reproduce the present invention by applying various examples.

By referring to a location of the subject in a first frame of a video, the block matching part 120 in accordance with an example embodiment of the present invention may perform a function of determining a location of the subject in a second frame of the video by using the block matching (BM) technology.

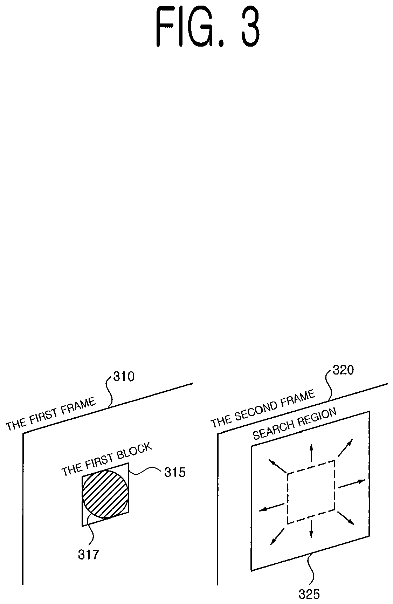

Fig. 3 is a drawing exemplarily expressing a configuration of performing block matching in accordance with an example embodiment of the present invention. By referring to Fig. 3, the block matching part 120 may continuously track a specified subject included in consecutive frames by performing block matching for two temporally adjacent frames 310 and 320. A process for tracking a subject A 317 in a first frame 310 and a second frame 320 is explained in details. For reference, it may be assumed that the first frame 310 and the second frame 320 have same pixel arrangement and the first frame 310 temporally precedes the second frame 320 in a time domain.

In accordance with an example embodiment of the present invention, a first block 315 with a size of M x N pixels which indicates the subject A 317 included in the first frame 310 may be determined. The first block may be determined from the direct detection of the subject A 317 on the first frame 310 by using the subject detection technology or the like as mentioned above.

In accordance with an example embodiment of the present invention, the block matching part 120 may search at least a region 325 of the second frame 320 to find what is best matched with the first block 315 of the second frame 320, where a location of the region 325 of the second frame may be determined on the basis of the location of the first block 315 of the first frame 310. For example, the location of the region 325 may be determined as a rectangular region with a size of X x Y pixels (X>M, Y>N) whose center is the location of the first block 315 of the first frame 310. To be brief, the block matching part 120 in accordance with an example embodiment of the present invention may determine, as the second block which indicates the subject A 317 in the second frame 320, what is best matched with the first block 315 among all or some blocks with a size of M x N pixels (i.e., candidate blocks) in the region 325 by comparing the candidate blocks with the first block 315 of the first frame 310.

As a method for calculating degrees of similarity between the candidate blocks and the first block 315, a method for determining that if a residual energy level, e.g., SSD (Sum of Squared Distances) of pixel values, acquired by subtracting values of a specific candidate block from those of the first block 315 (or vice versa) is smaller, a degree of similarity between the specific candidate block and the first block 315 is set to be higher may be adopted but it is not limited only to this and a variety of technologies may be properly adopted within a scope of the objects of the prevent invention which are achievable.

Next, the tracking method determining part 130 in accordance with an example embodiment of the present invention may perform a function of deciding either a subject detection technology or a block matching technology as a method for tracking the subject in the video frame by referring to the result of subject tracking which is performed by the subject detecting part 110 or the block matching part 120.

More concretely, to track the subject in the video frame, the tracking method determining part 130 in accordance with an example embodiment of the present invention may track the subject basically by the block matching technology and if a degree of reliability of the block matching is less than a prefixed threshold value by evaluating the result of the block matching for every frame, it may convert a tracking method from the block matching method to the subject detecting method which has a low speed but a high accuracy.

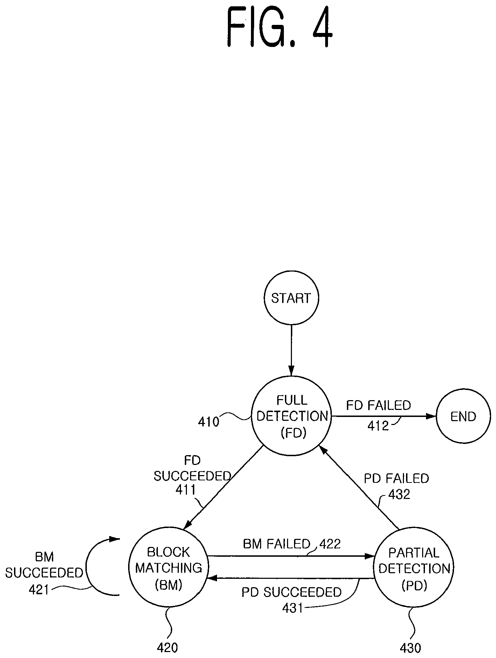

Fig. 4 is a state diagram exemplarily illustrating the process of determining a subject tracking method in accordance with an example embodiment of the present invention. As illustrated in Fig. 4, as a method for tracking the subject in the video frame, the subject tracking apparatus 100 in accordance with an example embodiment of the present invention may adopt one of the following methods selectively: (i) a full detection (FD) method for detecting the subject in the whole region of a frame, i.e., all pixels included in a frame, (ii) a partial detection (PD) method for detecting the subject only in a partial region of the frame, i.e., only pixels set as a search region in the frame, or (iii) a block matching (BM) method for tracking the subject by referring to a block which corresponds to the subject region included in an adjacent frame.

Below will be the explanation on a subject tracking process in accordance with an example embodiment of the present invention. For reference, it is assumed that the subject for tracking is a person's face but it is not limited only to this and other subjects whose shapes may be specified within a video frame will be the subjects for tracking as mentioned in the present invention.

First of all, the subject tracking apparatus 100 in accordance with an example embodiment of the present invention may perform a full detection (FD) for the whole region of a start frame where the subject tracking starts and detect a region corresponding to a face A in the start frame to thereby start a tracking process for the face A as shown at a process of 410. As shown above, the region of the face A detected as a result of performing the full detection to the start frame may be a reference of the block matching to be performed later as shown at a process of 411. If a person's face is not detected even though the full detection was performed for the start frame, the subject tracking process may be ended as shown at a process of 412.

Next, by performing the block matching for two adjacent frames, i.e., a first and a second frames, the subject tracking apparatus 100 in accordance with an example embodiment of the present invention may specify a second block corresponding to the region of the face A in the second frame by referring to a first block corresponding to the region of the face A in the first frame as shown at a process of 420.

More specifically, to find a specific block in the second frame best matched with the first block with a size of M x N pixels included in the first frame, the subject tracking apparatus 100 in accordance with an example embodiment of the present invention may search at least part of regions (a so-called search region) in the second frame. Herein, the at least part of regions in the second frame may be set on the basis of the location of the first block in the first frame. For example, the search region may be set as a rectangular region with a size of X x Y pixels whose center is the location of the first block in the first frame (X>M, Y>N). In other words, the subject tracking apparatus 100 in accordance with an example embodiment of the present invention may determine the degrees of similarity by comparing the first block in the first frame with possibly all or some blocks with a size of M x N (i.e., the candidate blocks) in the search region of the second frame and if a specific block best matched with the first block among the blocks in the search region of the second frame has a degree of similarity exceeding the predetermined threshold, the specific block best matched with the first block may be determined as the second block which indicates the region of the subject A in the second frame.

More concretely, if a degree of similarity between the first block in the first frame, i.e., the reference block, and the second block in the second frame as a result of block matching exceeds the predetermined threshold, it may be judged that the result of block matching is reliable. Under the judgment, the subject tracking apparatus 100 in accordance with an example embodiment of the present invention may confirm that the second block is a block indicating the region of the face A in the second frame as shown at a process of 421. To the contrary, if a degree of similarity between the first block in the first frame and the second block in the second frame as the result of block matching is less than the predetermined threshold, it may be judged that the result of block matching is not reliable. Under the judgment, it may perform partial detection (PD) for the search region in the second frame and directly detect the region of the face A in the second frame instead of confirming that the second block is a block indicating the region of the face A in the second frame as shown at a process of 422. For reference, the detailed method for calculating the degree of similarity between the first block and the second block is omitted because it has been sufficiently explained above.

If the degree of reliability of block matching (i.e., the degree of similarity between the first block and the second block) is less than the predetermined threshold, the subject tracking apparatus 100 in accordance with an example embodiment of the present invention may directly detect the region of the face A for a partial region of the frame, i.e., the pixels set as the search region in the frame, and thereby keep the degree of reliability of subject tracking exceeding the predetermined value as shown at a process of 430.

As shown above, if the region of the face A is detected as a result of partial detection (PD) in the search region, the detected region of the face A may be confirmed as a region which indicates the face A in the frame and may become a reference block for a succeeding block matching process to be performed later as shown at a process of 431. To the contrary, if the region of the face A is not detected as the result of partial detection (PD) in the search region, the subject tracking apparatus 100 may perform full detection (FD) for the whole region of the frame to cause the subject tracking process for the face A to continue as shown at a process of 432.

As explained above, to track the subject included in a video frame, the tracking method determining part 130 may properly mix the subject detection method and the block matching method to thereby lead the tracking process for the subject in the video frame to be performed more rapidly and more accurately.

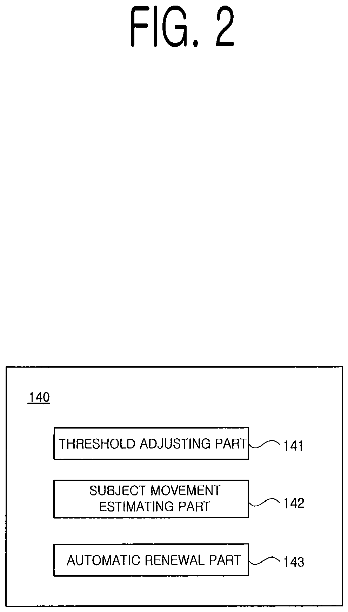

Furthermore, the situation adapting part 140 in accordance with an example embodiment of the present invention may perform a function of instructing the subject tracking algorithm to be adaptively implemented according to a situation where the video is shot (or according to the situation where the movie is inputted in a preview state). By referring to Fig. 2, the situation adapting part 140 in accordance with an example embodiment of the present invention may include the threshold adjusting part 141, the subject movement estimating part 142 and the automatic renewal part 143. Below is a detailed explanation on the function of each component of the situation adapting part 140.

First, the threshold adjusting part 141 in accordance with an example embodiment of the present invention may perform a function of adaptively adjusting the predetermined threshold which serves as a reference for determining a degree of reliability of a result of block matching by referring to the contrast of a photographing environment which may be changed by darkness and brightness of the photographing environment and by features of photographing devices.

For example, if the contrast in the photographing environment is high due to the shooting in a bright place, the residual energy level (e.g., SSD of pixel values) between blocks with a high degree of similarity may be determined to be high. To the contrary, if the contrast in the photographing environment is low due to the shooting in a dark place, the residual energy level between blocks with a low degree of similarity may be determined to be low. Accordingly, if the video frames are shot in a bright environment with a relatively high contrast on the condition that the predetermined threshold which is a reference for determining a degree of reliability of the result of block matching is used with a value of the predetermined threshold being fixed, even though block matching is accurately performed, the residual energy level appears to be high, and therefore, a partial detection or a full detection algorithm is too often called and thereby the speed of subject tracking becomes slower. In addition, if the video frames are shot in a dark environment with a relatively low contrast on the condition that the value of the predetermined value is fixed, even though block matching is not accurately performed, an incorrect subject is continuously tracked without the process being converted to the partial detection or the full detection because the residual energy appears to be low.

To solve the aforementioned problems, the threshold adjusting part 141 in accordance with an example embodiment of the present invention may adaptively adjust the predetermined threshold according to the contrast in the photographing environment changeable by darkness and brightness of the photographing environment and/or by the features of photographing devices. That is, if the contrast of the photographing environment is high, the threshold adjusting part 141 may relatively decrease the predetermined threshold for the degree of similarity and contrarily if the contrast of the photographing environment is low, it may relatively increase the predetermined threshold therefor. Herein, the contrast of the photographing environment may be estimated by intensity variance of pixel values which form a block as a criterion for block matching. For example, it may be estimated as (a proportional factor) x (intensive variance of the pixel values which form the block). But it is not limited only to this and it will be able to be properly changed within a scope of the achievable objects of the prevent invention.

In accordance with an example embodiment of the present invention, the subject movement estimating part 142, furthermore, may perform a function of adaptively setting a location of the search region during the block matching process or during the partial detection process by considering the movements of the subject according to the movements of the hands of a user who takes the video by using a hand-held camera device.

In general, the subject in the video frames may appear to move at a high speed or with an acceleration by the movements of the hands of the user, etc. As technologies for compensating it, conventional technologies such as Kalman filtering have been introduced. But if a subject's estimated movement is reflected as it is to set the search region, there may occur a problem as follows: If the subject suddenly changes its direction due to vibration, shaking, etc. and if the search region is set based on the sudden changes in direction, the subject tracking performance may rather become deteriorated, because even though the search region for the block matching or the partial detection is reset according to the estimated movement of the subject, the subject might move to the opposite direction at the time when the reset search region is actually reflected.

Accordingly, the subject movement estimating part 142 in accordance with an example embodiment of the present invention may solve the aforementioned problems by reflecting only part of the movement (speed, acceleration, etc.) of the subject estimated by a motion estimation technology such as the Kalman filtering, etc. in the reset of the search region in the block matching or the partial detection. For example, the subject movement estimating part 142 may reset the search region for the block matching or the partial detection by reflecting only half of the movement of the estimated subject. By this means, the subject tracking apparatus 100 in accordance with the present invention may prevent the subject tracking process from being incorrectly performed by a hasty estimate for the movement of the subject and thereby respond more flexibly to the movement of the subject.

The automatic renewal part 143 in accordance with an example embodiment of the present invention may automatically renew the subject region in some video frames by calling the full detection (FD) or the partial detection (PD) in response to any rapid change in the outward appearance of the subject due to a change in lighting, a change in a size of the subject in video frames, a change in its position, etc. during the block matching (BM). If the outward appearance of the subject displayed in the video frames is rapidly changed, it is difficult to track the subject only by the block matching method. Therefore, the subject whose outward appearance is suddenly changed may be automatically detected by using the full detection method or the partial detection method in accordance with the present invention, resulting in accurate subject tracking.

A database (not illustrated) in accordance with an example embodiment of the present invention may store video frames which include the subject for tracking. In accordance with the present invention, the database (not illustrated) is a concept of a database not only in a narrow meaning but also in a broad meaning which includes data records, etc. based on computer file systems. From the aspect, it must be understood that, even a set of simple operation processing logs may be the database in the present invention if data can be extracted from the set. The database (not illustrated) may be possibly included in, or configured separately from, the subject tracking apparatus 100 at the necessity of those skilled in the art who implement the present invention.

In addition, the communication part 150 in accordance with an example embodiment of the present invention may perform a function of instructing the subject tracking apparatus 100 to communicate with an external device such as a telecommunications server (not illustrated) or a web server (not illustrated).

Lastly, the control part 160 in accordance with an example embodiment of the present invention may perform a function of controlling data flow among the subject detecting part 110, the block matching part 120, the tracking method determining part 130, the situation adapting part 140 and the communication part 150. Briefly, the control part 160 may control the flow of data from outside or among the components of the subject tracking apparatus 100 and thereby allow the subject detecting part 110, the block matching part 120, the tracking method determining part 130, the situation adapting part 140 and the communication part 150 to perform their unique functions.

In accordance with the present invention, since the algorithm for adaptively tracking the subject included in the video frame is provided, there may be an achievable effect on tracking the subject included in the frames of the video (particularly, face tracking) more rapidly and more accurately.

In accordance with the present invention, for the reason that the adaptive subject tracking algorithm may be provided in consideration of contrast of the photographing environment, the movement of the subject, any change in a situation(s) near the subject, etc., there may be an accomplishable effect on implementing the robust subject tracking technology.

The embodiments of the present invention can be implemented in a form of executable program command through a variety of computer means recordable to computer readable media. The computer readable media may include solely or in combination, program commands, data files and data structures. The program commands recorded to the media may be components specially designed for the present invention or may be usable to a skilled person in a field of computer software. Computer readable record media include magnetic media such as hard disk, floppy disk, magnetic tape, optical media such as CD-ROM and DVD, magneto-optical media such as floptical disk and hardware devices such as ROM, RAM and flash memory specially designed to store and carry out programs . Program commands include not only a machine language code made by a complier but also a high level code that can be used by an interpreter etc., which is executed by a computer. The aforementioned hardware device can work as more than a software module to perform the action of the present invention and they can do the same in the opposite case.

Accordingly, the thought of the present invention must not be confined to the explained embodiments, and the following patent claims as well as everything including variation equal to the patent claims pertain to the category of the thought of the present invention.

## Claims

1. An image processing method for adaptively tracking a subject in adjacent first and second frames of a video (310,320), each frame including an image (317) of the subject in a respective region of the frame, the method comprising the steps of:
(a) comparing a first block of pixels (315) in the first image frame (310) which comprises the subject image (317) with at least one candidate block of pixels in a search region set in the second frame (320);
(b) determining a second block of pixels among the at least one candidate block of pixels in said search region of the second frame (320) which has the highest degree of similarity to the first block (315) in the first frame (310);
(c) comparing the determined highest degree of similarity between the first block (315) in the first frame (310) and said second block in the second frame (320) with a predetermined threshold, and
(c1) when said highest degree of similarity is greater than the predetermined threshold value, defining said second block as the region including the subject image (317) in the second frame; and
(c2) when said highest degree of similarity is less than the predetermined threshold value, detecting the subject image (317) from pixels in the search region in the second frame (320) using a subject detection algorithm,
wherein the location of the search region in the second frame (320) is set based on the location of the first block (315) in the first frame (310), and estimated movements of the subject in the image frames (310,320) determined using a motion estimation algorithm.

2. The method of claim 1, further comprising determining the first block of pixels (315) by applying the subject detection algorithm to the first image frame (310).

3. The method of claim 1, wherein the step of (a) further comprises determining a search region (325) of the second frame (320) including the at least one candidate block based on the location of the first block (315) in the first frame (310).

4. The method of claim 1, wherein the degree of similarity is determined by referring to a sum of squared distances between respective pixel values in the first block and those in the second block.

5. The method of claim 1, wherein, at the step of (c2) if the subject image (317) is not detected in the search region in the second frame, then detecting the subject image (317) from all pixels of the second frame (320).

6. The method of claim 1, wherein the step (c2) further includes: determining the predetermined threshold value according to a contrast of a photographing environment.

7. The method of claim 1, wherein the step (c2) further includes: detecting the subject image (317) from pixels in the search region in the second frame (320) using the subject detection algorithm when it is determined that there occurs a change between an outward appearance of the specific subject in the first frame and that in the second frame which exceeds a pre-set degree.

8. The method of claim 1, wherein the motion estimation algorithm comprises Kalman filtering.

9. The method of claim 1, wherein the estimated movement comprises speed or acceleration of the subject in the image frames.

10. The method of claim 1, wherein setting the location of the search region in the second frame (320) comprises reflecting only half of the estimated movements.

11. An apparatus (100) comprising means for carrying out the steps of the method of any one of claims 1 to 10.

12. A computer-readable storage medium comprising instructions which, when executed by a computer, cause the computer to execute the method of any one of claims 1 to 10.

## Patentansprüche

1. Bildverarbeitungsverfahren für ein adaptives Verfolgen eines Gegenstandes in benachbarten ersten und zweiten Einzelbildern eines Videos (310, 320), wobei jedes Einzelbild ein Bild (317) des Gegenstandes in einem entsprechenden Bereich des Einzelbildes enthält, wobei das Verfahren die folgenden Schritte umfasst:
(a) Vergleichen eines ersten Pixelblocks (315) in dem ersten Einzelbild (310), welches das Gegenstandsbild (317) umfasst, mit mindestens einem Kandidatenpixelblock in einem Suchbereich, der in dem zweiten Einzelbild (320) eingestellt ist;
(b) Ermitteln eines zweiten Pixelblocks aus dem mindestens einen Kandidatenpixelblock in dem Suchbereich des zweiten Einzelbildes (320), der den höchsten Ähnlichkeitsgrad mit dem ersten Block (315) in dem ersten Einzelbild (310) aufweist;
(c) Vergleichen des höchsten Ähnlichkeitsgrades zwischen dem ersten Block (315) in dem ersten Einzelbild (310) und dem zweiten Block in dem zweiten Einzelbild (320) mit einem vorbestimmten Schwellenwert, und
(c1) wenn der höchste Ähnlichkeitsgrad größer als der vorbestimmte Schwellenwert ist, Definieren des zweiten Blocks als den Bereich, der das Gegenstandsbild (317) in dem zweiten Einzelbild enthält; und
(c2) wenn der höchste Ähnlichkeitsgrad niedriger als der vorbestimmte Schwellenwert ist, Erkennen des Gegenstandsbildes (317) aus Pixeln in dem Suchbereich in dem zweiten Einzelbild (320) mithilfe eines Gegenstandserkennungsalgorithmus,
wobei der Standort des Suchbereichs in dem zweiten Einzelbild (320) aufgrund des Standorts des ersten Blocks (315) in dem ersten Einzelbild (310) eingestellt wird und geschätzte Bewegungen des Gegenstandes in den Einzelbildern (310, 320) mithilfe eines Bewegungsschätzalgorithmus ermittelt werden.

2. Verfahren nach Anspruch 1, das außerdem ein Ermitteln des ersten Pixelblocks (315) umfasst, indem der Gegenstandserkennungsalgorithmus auf das erste Einzelbild (310) angewandt wird.

3. Verfahren nach Anspruch 1, wobei der Schritt (a) außerdem ein Ermitteln eines Suchbereichs (325) des zweiten Einzelbildes (320) einschließlich des mindestens einen Kandidatenblocks aufgrund des Standorts des ersten Blocks (315) in dem ersten Einzelbild (310) umfasst.

4. Verfahren nach Anspruch 1, wobei der Ähnlichkeitsgrad ermittelt wird, indem auf eine Summe von quadratischen Abständen zwischen entsprechenden Pixelwerten in dem ersten Block und jenen in dem zweiten Block Bezug genommen wird.

5. Verfahren nach Anspruch 1, wobei in dem Schritt (c2), wenn das Gegenstandsbild (317) nicht in dem Suchbereich erkannt wird, das Erkennen des Gegenstandsbildes (317) auf alle Pixel des zweiten Einzelbildes (320) ausgedehnt wird.

6. Verfahren nach Anspruch 1, wobei der Schritt (c2) außerdem umfasst: Ermitteln des vorbestimmten Schwellenwerts gemäß einem Kontrast einer Fotografierumgebung.

7. Verfahren nach Anspruch 1, wobei der Schritt (c2) außerdem umfasst: Erkennen des Gegenstandsbildes (317) aus Pixeln in dem Suchbereich in dem zweiten Einzelbild (320) mithilfe des Gegenstandserkennungsalgorithmus, wenn ermittelt wird, dass eine Änderung zwischen einer äußeren Erscheinung des spezifischen Gegenstandes in dem ersten Einzelbild und derjenigen in dem zweiten Einzelbild auftritt, die einen voreingestellten Grad überschreitet.

8. Verfahren nach Anspruch 1, wobei der Bewegungsschätzalgorithmus eine Kalman-Filterung umfasst.

9. Verfahren nach Anspruch 1, wobei die geschätzte Bewegung eine Geschwindigkeit oder eine Beschleunigung des Gegenstandes in den Einzelbildern umfasst.

10. Verfahren nach Anspruch 1, wobei das Einstellen des Standorts des Suchbereichs in dem zweiten Einzelbild (320) ein Reflektieren von nur der Hälfte der geschätzten Bewegungen umfasst.

11. Vorrichtung (100), die ein Element zum Ausführen der Schritte des Verfahrens nach einem der Ansprüche 1 bis 10 umfasst.

12. Computerlesbares Speichermedium, das Befehle umfasst, die, wenn sie von einem Computer ausgeführt werden, den Computer veranlassen, das Verfahren nach einem der Ansprüche 1 bis 10 auszuführen.

## Revendications

1. Procédé de traitement d'image pour le suivi adaptatif d'un sujet dans des première et seconde trames adjacentes d'une vidéo (310, 320), chaque trame comprenant une image (317) du sujet dans une région respective de la trame, le procédé comprenant les étapes suivantes :
(a) comparer un premier bloc de pixels (315) dans la première trame d'image (310) qui comprend l'image du sujet (317) avec au moins un bloc candidat de pixels dans une région de recherche définie dans la seconde image (320) ;
(b) déterminer un second bloc de pixels parmi l'au moins un bloc candidat de pixels dans ladite région de recherche de la seconde trame (320) qui présente le degré de similarité le plus élevé avec le premier bloc (315) dans la première trame (310) ;
(c) comparer le degré de similarité le plus élevé déterminé entre le premier bloc (315) dans la première trame (310) et ledit second bloc dans la seconde trame (320) à un seuil prédéterminé, et
(c1) lorsque ledit degré de similarité le plus élevé est supérieur à la valeur seuil prédéterminée, définir ledit second bloc comme la région incluant l'image du sujet (317) dans la seconde trame ; et
(c2) lorsque ledit degré de similarité le plus élevé est inférieur à la valeur seuil prédéterminée, détecter l'image du sujet (317) à partir de pixels dans la région de recherche dans la seconde trame (320) en utilisant un algorithme de détection de sujet,
où l'emplacement de la région de recherche dans la seconde trame (320) est défini sur la base de l'emplacement du premier bloc (315) dans la première trame (310), et les mouvements estimés du sujet dans les trames d'image (310, 320) déterminés en utilisant un algorithme d'estimation de mouvement.

2. Procédé selon la revendication 1, comprenant en outre de déterminer le premier bloc de pixels (315) en appliquant l'algorithme de détection de sujet à la première trame d'image (310).

3. Procédé selon la revendication 1, dans lequel l'étape (a) comprend en outre de déterminer une région de recherche (325) de la seconde trame (320) comprenant l'au moins un bloc candidat sur la base de l'emplacement du premier bloc (315) dans la première trame (310).

4. Procédé selon la revendication 1, dans lequel le degré de similarité est déterminé en se référant à une somme des distances au carré entre les valeurs de pixels respectives du premier bloc et celles du second bloc.

5. Procédé selon la revendication 1, dans lequel, à l'étape (c2), si l'image du sujet (317) n'est pas détectée dans la région de recherche dans la seconde trame, il est alors détecté l'image du sujet (317) à partir de tous les pixels de la seconde trame (320).

6. Procédé selon la revendication 1, dans lequel l'étape (c2) comprend en outre de déterminer la valeur seuil prédéterminée en fonction d'un contraste d'un environnement photographique.

7. Procédé selon la revendication 1, dans lequel l'étape (c2) comprend en outre de détecter l'image du sujet (317) à partir de pixels dans la région de recherche dans la seconde trame (320) en utilisant l'algorithme de détection de sujet lorsqu'il est déterminé qu'il se produit un changement entre une apparence extérieure du sujet spécifique dans la première trame et celle dans la seconde trame qui dépasse un degré prédéfini.

8. Procédé selon la revendication 1, dans lequel l'algorithme d'estimation de mouvement comprend un filtrage de Kalman.

9. Procédé selon la revendication 1, dans lequel le mouvement estimé comprend la vitesse ou l'accélération du sujet dans les trames d'images.

10. Procédé selon la revendication 1, dans lequel la définition de l'emplacement de la région de recherche dans la seconde trame (320) comprend de refléter uniquement la moitié des mouvements estimés.

11. Appareil (100) comprenant des moyens pour exécuter les étapes du procédé de l'une quelconque des revendications 1 à 10.

12. Support de stockage lisible par ordinateur comprenant des instructions qui, lorsqu'elles sont exécutées par un ordinateur, amènent l'ordinateur à exécuter le procédé selon l'une quelconque des revendications 1 à 10.
